# EUROPEAN PATENT APPLICATION

(11) **EP 4 556 313 A1**
(43) Date of publication of application: **21.05.2025**
(21) Application number: 23210651.8
(22) Date of filing: 17.11.2023
(51) Int. Cl.: B60Q 1/26, F21S 43/14, F21S 43/15, F21S 43/19, F21S 43/20, F21S 43/27, F21S 45/00, F21S 45/47, F21S 45/48, F21S 45/50

(54) **FLEXIBLE WARNING LIGHT**

(71) Applicant: Juluen Enterprise Co., Ltd., New Taipei City 236029 (TW)
(72) Inventor: Liu, Chao-Ching, 236029 NEW TAIPEI CITY (TW); Huang, Yi-Ting, 236029 NEW TAIPEI CITY (TW); Lo, Wen, 236029 NEW TAIPEI CITY (TW); Lin, Yu-Ting, 236029 NEW TAIPEI CITY (TW); Yen, Shuo-Ying, 236029 NEW TAIPEI CITY (TW)
(74) Representative: Straus, Alexander

(57) **Abstract**

A flexible warning light includes a lamp housing (1) including a base (11) with a bottom plate (111), a flexible lamp shell (12) covering the base (11) and an accommodation space (10) defined between the base (11) and the flexible lamp shell (12), and a light-emitting device (2) mounted in the accommodation space (10) and having at least one light-emitting element (211) on the top of a flexible circuit board (21) of a light-emitting device (2) on the top, and a first heat sink (22) and multiple second heat sinks (23) on the bottom. The flexible lamp shell (12) will elastically deform in accordance with the surface curvature of a preset vehicle body to drive the first heat sink (22) and the second heat sinks (23) to deform so that the base (11) can be closely attached to the curved surface of the preset vehicle body through the deformation of the first heat sink (22) and the second heat sinks (23), so as to achieve the effect of being more compliant with the curved vehicle body.

## Description

### BACKGROUND OF THE INVENTION

### 1. Field of the Invention:

The present invention relates to a flexible warning light, in particular to a lamp shell made of a flexible material that is positioned on a curved surface of a vehicle body to be installed and then elastically deforms, thereby driving a first heat sink and at least one second heat sink in the base to deform, so that the base can be closely attached to the curved surface of the vehicle body to be installed to achieve the effect of being more compliant with the curved vehicle body.

### 2. Description of the Related Art:

Today's electric vehicles are mostly designed with curved surfaces. The current warning lights have a rigid structure and cannot be installed snugly on curved vehicles. If a hard warning light is forcibly installed on the curved surface of an electric vehicle, it will cause the warning light to be unstable or even fall off the surface of the vehicle body, causing the warning light to malfunction. This is the key point that those engaged in this industry urgently want to study and improve.

### SUMMARY OF THE INVENTION

The present invention has been accomplished under the circumstances in view. It is the main object of the present invention to provide a flexible warning light, which comprises: a lamp housing and a light-emitting device. The lamp housing comprises a base, a lamp shell, and an accommodation space defined between the base and the lamp shell. The base comprises a bottom plate. The lamp shell is made of a flexible material and covered on the base. The light-emitting device is mounted in the accommodation space. The light-emitting device comprises a flexible circuit board with at least one light-emitting element mounted on the flexible circuit board, and a first heat sink and at least one second heat sink provided on a bottom side of the flexible circuit board. The lamp shell made of a flexible material is elastically deformable in accordance with the surface curvature of a preset vehicle body to drive the first heat sink and the at least one second heat sink to deform, thereby fitting the base on the surface of the preset vehicle body.

It is another object of the present invention to provide a flexible warning light, wherein the first heat sink of the light-emitting device comprises a first wire hole for a plurality of predetermined wires to pass through and a plurality of reinforcement ribs protruding from two sides surfaces of the first wire hole for structural reinforcement; the at least one second heat sink of the light-emitting device each comprises a second wire hole corresponding to the first wire hole, and a plurality of grooves recessed on two opposite sides thereof for accommodating the reinforcement ribs. This further strengthens the structure to prevent the first heat sink and the at least one second heat sink from breaking when the lamp housing is bent.

It is still another object of the present invention to provide a flexible warning light, wherein the bottom plate of the base comprises a through hole for a plurality of predetermined wires to pass through; the flexible circuit board of the light-emitting device is provided with a plurality of positioning holes for the predetermined wires to pass through and position; the base comprises a positioning sleeve protruding from the bottom surface of the bottom plate around the periphery of the through hole of the bottom plate, at least one limiting block protruded from one side of the positioning sleeve, and a buffer pad assembled with the bottom surface of the bottom plate. The buffer pad comprises two notches respectively located on two opposite sides, an alignment hole sleeved on the positioning sleeve, and a limiting hole extended from at least one side of the alignment hole to accommodate the at least one limiting block respectively.

It is still another object of the present invention to provide a flexible warning light, wherein the base of the lamp housing is made of metal.

It is still another object of the present invention to provide a flexible warning light, wherein the base of the lamp housing is made of silicone material.

It is still another object of the present invention to provide a flexible warning light, wherein the base further comprises a convex plate extending upward from the periphery of the bottom plate and inserted into the lamp shell.

It is still another object of the present invention to provide a flexible warning light, wherein the lamp shell comprises a main body, and at least one lampshade mounted in the main body and covering said at least one light-emitting element on the flexible circuit board; the lamp shell further comprises a plurality of positioning bumps provided on at least two sides inside main body and resisted against the surface of said flexible circuit board, and a sealing flange was provided on the inner edge of said main body to fit and surround the periphery of the bottom plate.

### BRIEF DESCRIPTION OF THE DRAWINGS

FIG. 1 is a three-dimensional appearance view of the present invention.
FIG. 2 is a three-dimensional appearance view of the present invention from another perspective.
FIG. 3 is a three-dimensional exploded view of the present invention.
FIG. 4 is an exploded three-dimensional view of the present invention from another perspective.
FIG. 5 is a side cross-sectional view of the present invention.
FIG. 6 is a three-dimensional appearance view of another embodiment of the present invention.

### DETAILED DESCRIPTION OF THE PREFERRED EMBODIMENT

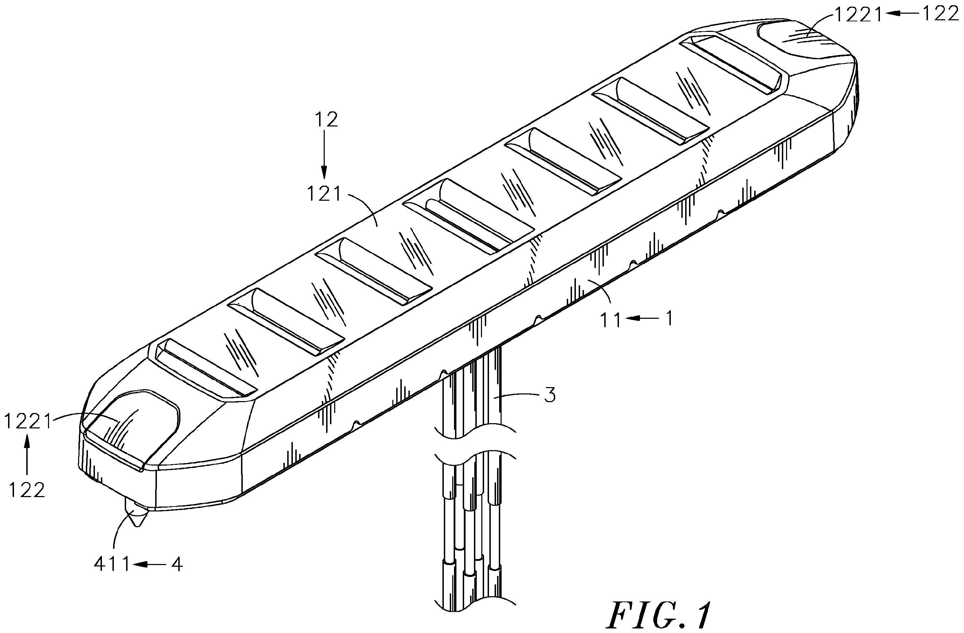

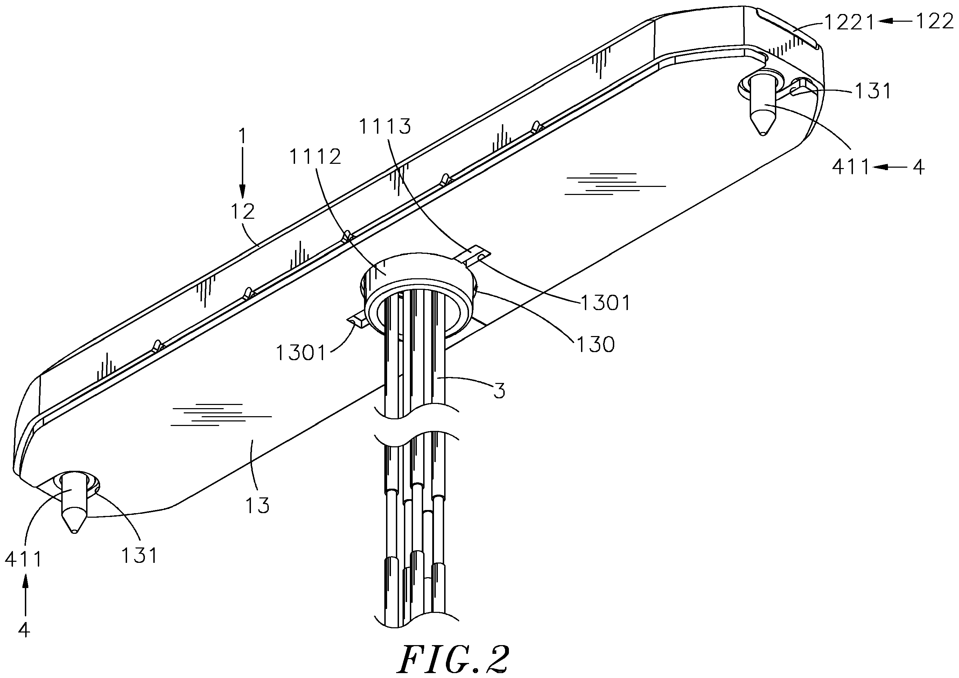

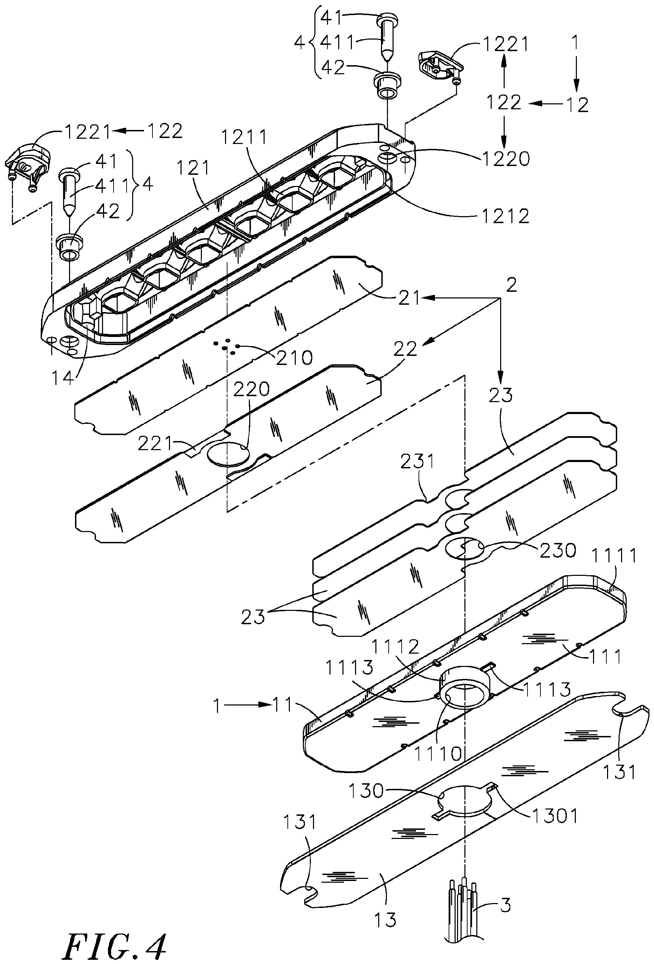

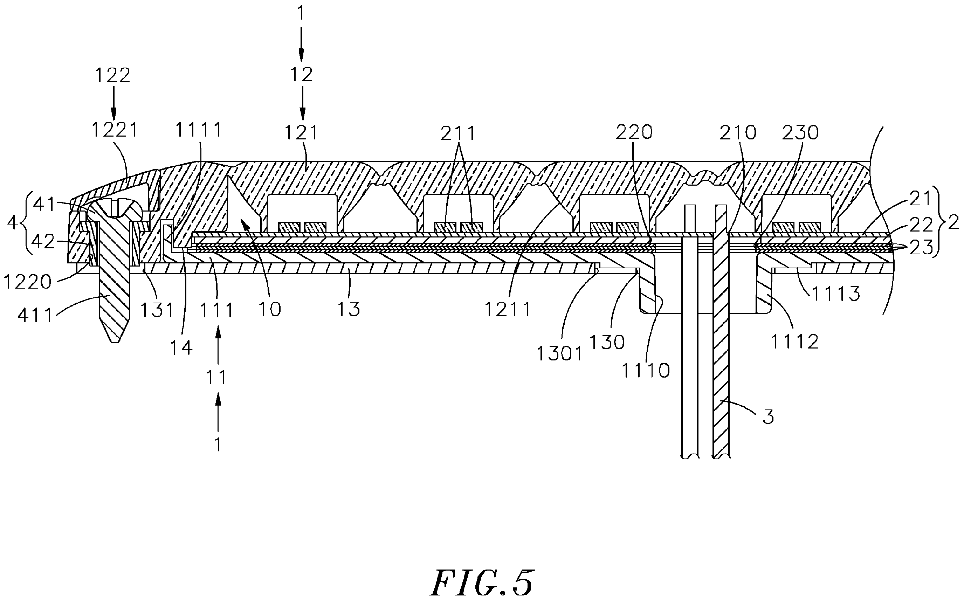

Please refer to FIGS. 1 to 5. The flexible warning light of the present invention mainly comprises a lamp housing **1** and a light-emitting device **2**. The connection relationship between the aforementioned components is as follows:
The lamp housing **1** comprises a base **11** and a lamp shell **12**, and an accommodation space **10** is provided between the base **11** and the lamp shell **12**. The base **11** is made of metal. The base **11** comprises a penetrated bottom plate **111** provided with a through hole **1110** for a plurality of wires **3** to pass through, a convex plate **1111** extending upward from the periphery of the bottom plate **111** and inserted into the lamp shell **12**, a positioning sleeve **1112** protruding from the bottom surface of the bottom plate **111** around the periphery of the through hole **1110**, at least one limiting block **1113** protruded from the positioning sleeve **1112**, and a buffer pad **13** assembled with the bottom surface of the bottom plate **111**. The buffer pad **13** concavely comprises two notches **131** respectively located on both sides, an alignment hole **130** sleeved on the positioning sleeve **1112**, and at least one limiting hole **1301** extended from at least one side of the alignment hole **130** to corresponds to accommodate the at least one limiting block **1113** respectively.

The lamp shell **12** is made of a flexible material, and the lamp shell **12** comprises a main body **121**, at least one lampshade **1211** mounted in the main body **121**, and a plurality of mounts **122** located on at least two sides of the main body **121** for assembling on the vehicle to be installed.

The light-emitting device **2** is assembled in the accommodation space **10** between the base **11** and the lamp shell **12**. The light-emitting device **2** comprises a flexible circuit board **21** provided with at least one light-emitting element **211** corresponding to the position of the at least one lampshade **1211** in the main body **121** and a plurality of positioning holes **210** for the wires **3** to pass through and set, and a first heat sink **22** and the at least one second heat sink **23** provided on the bottom side of the flexible circuit board **21**. The first heat sink **22** is provided with a first wire hole **220** for the wires **3** to pass through, and reinforcement ribs **221** with a reinforced structure protruding from both side surfaces of the first wire hole **220** of the first heat sink **22**. Each of the at least one second heat sink **23** is provided with a second wire hole **230** corresponding to the first wire hole **220**, and grooves **231** for accommodating the reinforcement ribs **221** are recessed on both sides of the second heat sink **23**.

Furthermore, when constructing the present invention, the wires **3** to be installed in the vehicle body (not shown in the FIG.) are first passed through the alignment hole **130** of the buffer pad **13**, the through hole **1110** of the bottom plate **111**, the first wire hole **220** of the first heat sink **22**, and the second wire hole **230** of the second heat sink in sequence, and then positioned in the positioning holes **210** of the flexible circuit board **21** to form electrical connections with the flexible circuit board **21**. Then cover the base **11** with the lamp shell **12** so that the light-emitting device **2** is located in the accommodation space **10**, and the positioning bumps **14** provided on at least two sides inside the lamp housing **1** will resist the surface of the flexible circuit board **21**, and then push the flexible circuit board **21** downward to press the first heat sink **22** and the at least one second heat sink **23** against the surface of the bottom plate **111** to form a position. At the same time, the at least one lampshade **1211** in the lamp shell **12** will cover the at least one light-emitting element **211** on the flexible circuit board **21** to guide light refraction, and the mounts **122** on at least two sides of the main body **121** of the lamp shell **12** will be positioned on the surface of the vehicle body to be installed. Then at least two fasteners **4** are respectively inserted into the fixing holes **1220** provided in the mounts **122** and locked to the surface of the vehicle body to be installed. Since the lamp shell **12** of the lamp housing **1** is made of a flexible material, after the two mounts **122** are positioned, the lamp shell **12** will elastically deform in accordance with the surface curvature of the vehicle body to be installed to drive the first heat sink **22** and the at least one second heat sink **23** to deform. Then, the base **11** is deformed by the influence of the first heat sink **22** and the at least one second heat sink **23** inside, so that the base **11** can closely contact the surface of the vehicle body to be installed. This completes the installation of the overall structure of the flexible warning light of the present invention.

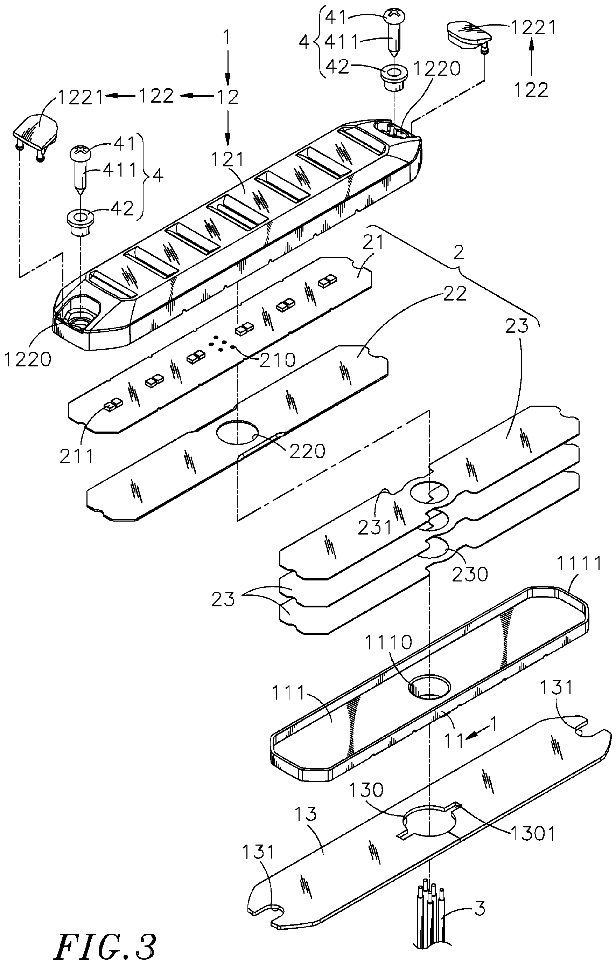

Please continue to refer to FIGS. 3 to 5. It can be clearly seen from the FIGS. that the first heat sink **22** and the at least one second heat sink **23** that are located between the base **11** and the lamp shell **12** and are attached to the flexible circuit board **21** will dissipate heat when the flexible circuit board **21** is operating. The quantity of the at least one second heat sink **23** can be adjusted according to the heat dissipation requirement of the flexible circuit board **21**. The heat energy is transferred through the integrated structural surfaces of the first heat sink **22** and the at least one second heat sink **23** to reduce the heat accumulation inside the heat sink, and the base **11** made of metal is used to increase the transfer of heat energy to achieve more effective heat dissipation. The grooves **231** on both sides of the at least one second heat sink **23** will be sleeved on the two reinforcement ribs **221** protruding on the surface of the first heat sink **22** to form a structural reinforcement, thereby preventing the first heat sink **22** and the at least one second heat sink **23** from breaking when the lamp housing **1** is bent.

In addition, the thickness of the above-mentioned first heat sink **22** and the at least one second heat sink **23** is each respectively between 0.1mm~1.5mm. In a preferred implementation, the thickness of the first heat sink **22** and the at least one second heat sink **23** is each respectively between 0.2mm and 0.8mm. It uses multiple heat sinks to increase the bending feel and is easier to bend than a single heat sink.

In addition, in the preferred embodiment of the present invention, the base **11** of the lamp housing **1** is made of metal. However, the base **11** can also be made of silicone or plastic material that can deform in conjunction with the lamp shell **12**. Such simple equivalent changes and modifications do not limit the scope of protection of the present invention and are hereby stated.

In addition, in the preferred embodiment of the present invention, the at least one lampshade **1211** provided in the main body **121** is in the shape of a square frame, a spherical shape, or other shapes that has the function of covering the at least one light-emitting element **211** and are hereby stated.

In addition, in this embodiment, the inner edge of the main body **121** of the lamp shell **12** is provided with a sealing flange **1212** that fits and surrounds the periphery of the bottom plate **111** to form a seal and achieve waterproof and dustproof effects.

Furthermore, the at least two fasteners **4** in this embodiment each have a head **41**, and a stem **411** with a smaller outer diameter extends downward from the head **41**, and inside the fixing holes **1220** of the mount **122** each are provided with a cap **42** for the stem **411** to be worn and fixed. The stems **411** will orderly pass through the fixing holes **1220** and the notches **131** of the buffer pad **13** in order and be positioned on the surface of the vehicle body to be installed. After positioning, flip covers **1221** are respectively assembled to the fixing holes **1220**, thereby achieving the effect of firmly fixing the flexible warning light of the present invention.

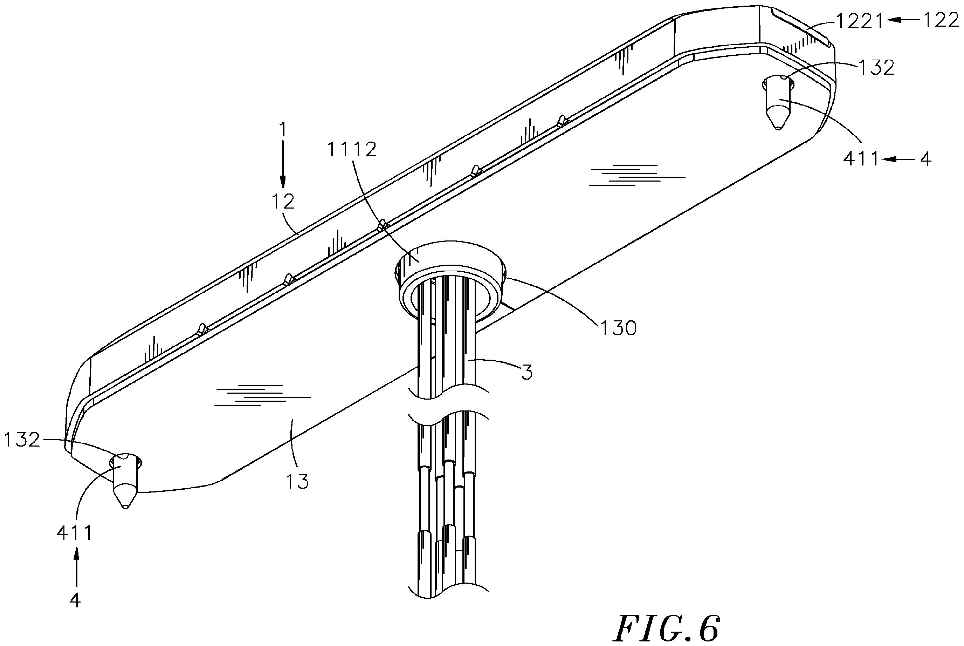

Please refer to FIG. 6, which is very similar to the structure disclosed in FIGS. 1 to 5, and the only difference is that the positioning sleeve **1112** protruding from the bottom side of the bottom plate **111** is not provided with the at least one limiting block **1113**, and the buffer pad **13** is only provided with the alignment hole **130** for the positioning sleeve **1112** to pass through, and the two sides of the buffer pad **13** are provided with through holes **132** for the stems **411** of the fasteners **4** to pass through, so that the fasteners **4** can pass through the buffer pad **13** and be fixed on the surface of the vehicle body to be installed. The remaining structures disclosed in this embodiment are the same as those in FIGS. 1, 2, 3, 4, and 5, so they will not be described again here.

In addition, the present invention mainly uses the lamp shell **12** made of a flexible material positioned on the curved surface of the vehicle body to be installed and elastically deforms to drive the first heat sink **22** and the at least one second heat sink **23** to deform, so that the base **11** is deformed by the first heat sink **22** and the at least one second heat sink **23** and closely contacts the curved surface of the vehicle body to be installed, so as to achieve the effect of being more compliant with the curved vehicle body.

## Claims

1. A flexible warning light, comprising: a lamp housing (1) and a light-emitting device (2), wherein:
said lamp housing (1) comprises a base (11), a lamp shell (12) and an accommodation space (10) defined between said base (11) and said lamp shell (12), said base (11) comprising a bottom plate (111), said lamp shell (12) being made of a flexible material and covered on said base (11);
said light-emitting device (2) is mounted in said accommodation space (10), said light-emitting device (2) comprising a flexible circuit board (21), at least one light-emitting element (211) mounted on said flexible circuit board (21) and a first heat sink (22) and at least one second heat sink (23) provided on a bottom side of said flexible circuit board (21);
said lamp shell (12) made of a flexible material is elastically deformable in accordance with the surface curvature of a preset vehicle body to drive said first heat sink (22) and said at least one second heat sink (23) to deform, thereby fitting the surface of said preset vehicle body.

2. The flexible warning light as claimed in claim 1, wherein said first heat sink (22) of said light-emitting device (2) comprises a first wire hole (220) for a plurality of predetermined wires (3) to pass through, and a plurality of reinforcement ribs (221) protruding from two side surfaces of said first wire hole (220) for structural reinforcement; said at least one second heat sink (23) of said light-emitting device (2) each comprises a second wire hole (230) corresponding to said first wire hole (220), and a plurality of grooves (231) recessed on two sides thereof for accommodating said reinforcement ribs (221).

3. The flexible warning light as claimed in claim 1, wherein said base (11) of said lamp housing (1) is made of metal.

4. The flexible warning light as claimed in claim 1, wherein the thickness of said first heat sink (22) and said at least one second heat sink (23) of said light-emitting device (2) is each respectively 0.1mm~1,5mm.

5. The flexible warning light as claimed in claim 1, wherein said base (11) further comprises a convex plate (1111) extending upward from the periphery of said bottom plate (111) and inserted into said lamp shell (12).

6. The flexible warning light as claimed in claim 1, wherein said lamp shell (12) comprises a main body (121), and at least one lampshade (1211) mounted in said main body (121) and covering said at least one light-emitting element (211) on said flexible circuit board (21).

7. The flexible warning light as claimed in claim 6, wherein said lamp shell (12) further comprises a plurality of mounts (122) located on at least two sides of said main body (121) for assembling on the surface of the preset vehicle.

8. The flexible warning light as claimed in claim 6, wherein said lamp shell (12) further comprises a plurality of positioning bumps (14) provided on at least two sides inside said main body (121) and resisted against the surface of said flexible circuit board (21), and a sealing flange (1212) provided on an inner edge of said main body (121) to fit and surround the periphery of said bottom plate (111).

9. The flexible warning light as claimed in claim 1, wherein said bottom plate (111) of said base (11) comprises a through hole (1110) for a plurality of predetermined wires (3) to pass through, and said flexible circuit board (21) of said light-emitting device (2) is provided with a plurality of positioning holes (210) for said predetermined wires (3) to pass through and position.

10. The flexible warning light as claimed in claim 9, wherein said base (11) comprises a positioning sleeve (1112) extending downward and protruding from the bottom surface of said bottom plate (111) around the periphery of said through hole (1110) of said bottom plate (111), at least one limiting block (1113) protruded from said positioning sleeve (1112), and a buffer pad (13) assembled with the bottom surface of said bottom plate (111), said buffer pad (13) comprising two notches (131) respectively located on two opposite sides, an alignment hole (130) sleeved on said positioning sleeve (1112) and at least one limiting hole (1301) extended from at least one side of said alignment hole (130) to accommodate said at least one limiting block (1113) respectively.

## Amended claims

### Amended claims in accordance with Rule 137(2) EPC.

1. A flexible warning light, comprising: a lamp housing (1) and a light-emitting device (2), wherein:
said lamp housing (1) comprises a base (11), a lamp shell (12) and an accommodation space (10) defined between said base (11) and said lamp shell (12), said base (11) comprising a bottom plate (111), said lamp shell (12) being made of a flexible material and covered on said base (11);
said light-emitting device (2) is mounted in said accommodation space (10), said light-emitting device (2) comprising a flexible circuit board (21), at least one light-emitting element (211) mounted on said flexible circuit board (21) and a first heat sink (22) and at least one second heat sink (23) provided on a bottom side of said flexible circuit board (21);
said lamp shell (12) made of a flexible material is elastically deformable in accordance with the surface curvature of a preset vehicle body to drive said first heat sink (22) and said at least one second heat sink (23) to deform, thereby fitting the surface of said preset vehicle body;
**characterized in that**:
wherein the first heat sink (22) and the at least one second heat sink (23) provide integrated structural surfaces for transferring heat energy to reduce heat accumulation inside the first heat sink (22) and the at least one second heat sink (23).

2. The flexible warning light as claimed in claim 1, wherein said first heat sink (22) of said light-emitting device (2) comprises a first wire hole (220) for a plurality of predetermined wires (3) to pass through, and a plurality of reinforcement ribs (221) protruding from two side surfaces of said first wire hole (220) for structural reinforcement; said at least one second heat sink (23) of said light-emitting device (2) each comprises a second wire hole (230) corresponding to said first wire hole (220), and a plurality of grooves (231) recessed on two sides thereof for accommodating said reinforcement ribs (221).

3. The flexible warning light as claimed in claim 1, wherein said base (11) of said lamp housing (1) is made of metal.

4. The flexible warning light as claimed in claim 1, wherein the thickness of said first heat sink (22) and said at least one second heat sink (23) of said light-emitting device (2) is each respectively 0.1mm~1.5mm.

5. The flexible warning light as claimed in claim 1, wherein said base (11) further comprises a convex plate (1111) extending upward from the periphery of said bottom plate (111) and inserted into said lamp shell (12).

6. The flexible warning light as claimed in claim 1, wherein said lamp shell (12) comprises a main body (121), and at least one lampshade (1211) mounted in said main body (121) and covering said at least one light-emitting element (211) on said flexible circuit board (21).

7. The flexible warning light as claimed in claim 6, wherein said lamp shell (12) further comprises a plurality of mounts (122) located on at least two sides of said main body (121) for assembling on the surface of the preset vehicle.

8. The flexible warning light as claimed in claim 6, wherein said lamp shell (12) further comprises a plurality of positioning bumps (14) provided on at least two sides inside said main body (121) and resisted against the surface of said flexible circuit board (21), and a sealing flange (1212) provided on an inner edge of said main body (121) to fit and surround the periphery of said bottom plate (111).

9. The flexible warning light as claimed in claim 1, wherein said bottom plate (111) of said base (11) comprises a through hole (1110) for a plurality of predetermined wires (3) to pass through, and said flexible circuit board (21) of said light-emitting device (2) is provided with a plurality of positioning holes (210) for said predetermined wires (3) to pass through and position.

10. The flexible warning light as claimed in claim 9, wherein said base (11) comprises a positioning sleeve (1112) extending downward and protruding from the bottom surface of said bottom plate (111) around the periphery of said through hole (1110) of said bottom plate (111), at least one limiting block (1113) protruded from said positioning sleeve (1112), and a buffer pad (13) assembled with the bottom surface of said bottom plate (111), said buffer pad (13) comprising two notches (131) respectively located on two opposite sides, an alignment hole (130) sleeved on said positioning sleeve (1112) and at least one limiting hole (1301) extended from at least one side of said alignment hole (130) to accommodate said at least one limiting block (1113) respectively.
